# EUROPÄISCHE PATENTANMELDUNG

(11) **EP 1 111 350 A1**
(43) Veröffentlichungstag der Anmeldung: **27.06.2001**
(21) Anmeldenummer: 00126264.1
(22) Anmeldetag: 01.12.2000
(51) Int. Cl.: G01F 15/12

(54) **Wasserzähler**

(30) Priorität: 13.12.1999 DE 19959997
(71) Anmelder: SPANNER-POLLUX GmbH, D-67063 Ludwigshafen (DE)
(72) Erfinder: Lang, Gerhard, Maschinenbautechniker, 67134 Birkenheide (DE)
(74) Vertreter: Patentanwälte Möll und Bitterich

(57) **Zusammenfassung**

Gegenstand der Erfindung ist ein Wasserzähler, in dessen Gehäuseboden (2) ein Wasserfilter (16, 17) integriert ist. Das Filterelement (17) ist auswechselbar.

## Beschreibung

Die Erfindung betrifft Wasserzähler gemäß dem Oberbegriff des Anspruchs 1.

Die Gehäuse von Wasserzählern sind üblicherweise zweiteilig, damit Messkammer und Zählwerk bequem montiert werden können. Ursprünglich bestanden alle diese Elemente aus Metall, bevorzugt Messing oder Gusseisen. Man vergleiche die US 2 566 220. Nachdem die Kunststoff-Spritzgusstechnik ein qualitativ hohes Niveau erreicht hatte, wurden Messkammer und Zählwerk aus Kunststoffen hergestellt. Wegen der Druckfestigkeit wurden die Gehäuse jedoch weiterhin aus Metall hergestellt Inzwischen werden auch Gehäuseteile aus Kunststoff hergestellt und in Verbindung mit aus Metall bestehenden anderen Gehäuseteilen eingesetzt. Man vergleiche beispielsweise die DE-C 41 21 056, die DE-Osen 23 39 897 und 22 05 154 oder die EP-A 0 730 138.

Es ist bekannt, dass in Wasserleitungen nicht nur Wasser sondern auch grobe und feine Feststoffe, z. B. Sand, Rost und dergleichen, transportiert werden. Diese Feststoffe können die Messorgane des Wasserzählers beschädigen. Aus diesem Grund befindet sich in jedem Wasserzähler vor der Messkammer ein Sieb. Diese Siebe sind jedoch relativ grob, da sie andernfalls einen Druckabfall erzeugen würden, der höher ist als gesetzlich zulässig. Sie können daher auch nur grobe Feststoffe festhalten. Feinere Feststoffe und Schwebstoffe, die das Sieb passiert haben, können jedoch in der Messkammer, speziell an den Lagerstellen der rotierenden Messorgane, und in den nachfolgenden Armaturen, beispielsweise an den keramischen Dichtungen von Wasserhähnen, Schäden hervorrufen. Darüber hinaus kann es zu Ablagerungen im Leitungsnetz kommen, die den Querschnitt mehr oder weniger zusetzen.

Ein in den Einlassstutzen des Wasserzählergehäuses eingesetztes Sieb zeigt die DE-U 296 12 154. Zum Kontrollieren und gegebenenfalls Auswechseln muss der Wasserzähler komplett demontiert werden.

Die DE-C 44 40 683 offenbart ein Sieb, welches direkt unter dem Boden der Messkammer positioniert ist. Zum Kontrollieren und gegebenenfalls Auswechseln des Siebes müsste das Zählergehäuse geöffnet werden, wobei der Zähler jedoch seine Eichzulassung verlieren würde.

Aus der GB-A 22 83 925 ist ein in einem eigenen, zweiteiligen Gehäuse untergebrachtes Sieb offenbart. Das Siebgehäuse ist zur Verwendung mit einem Koax-Wasserzähler bestimmt und ebenfalls in Koaxtechnik hergestellt. Zum Kontrollieren und gegebenenfalls Auswechseln des Siebes sowie zum Reinigen des Gehäuseinneren kann das Gehäuse geöffnet werden.

Aus der GB-A 22 86 975 ist ein zweiteiliges Siebgehäuse bekannt, welches in Inline-Technik ausgebildet ist und zur Verwendung mit einem Inline-Zähler bestimmt ist. Zum Kontrollieren und gegebenenfalls Auswechseln des Siebes kann das Gehäuse geöffnet werden. Durch die Inline-Konstruktion ergibt sich jedoch eine erhebliche Baulänge.

Da die die üblichen Siebe passierenden Schwebstoffe an den rotierenden Messorganen, insbesondere an deren Lagern, Schäden hervorrufen können, hat die Industrie versucht, die Lager besonders zu schützen. So zeigt beispielsweise die CH-A 684 027 einen Wasserzähler, dessen Flügelradwelle in Kugellagern gelagert ist. Um die Schwebstoffe von den Kugellagern fernzuhalten, ohne den für die Schmierung der Lager erforderlichen Zutritt des Wassers zu behindern, ist vor dem Kugellager ein Mikrofilter vorgesehen.

Da die beschränkte Filterwirkung der handelsüblichen Siebe bekannt ist, empfiehlt die Deutsche Industrie Norm, hinter jedem Hauswasserzähler einen Feinfilter einzubauen, der auch feine Schwebstoffe zurückhält. Obwohl der Einbau des Filters vor dem Wasserzähler vernünftiger wäre, weil dann auch Beschädigungen der Messorgane mit Sicherheit ausgeschlossen werden könnten, ist der Filtereinbau hinter dem Wasserzähler vorgeschrieben, um Manipulationen zu Lasten des Wasserversorgungsunternehmens durch unberechtigte Entnahme von Wasser vor der Messeinrichtung zu verhindern. In allen Fällen ist der Einbau eines solchen Filters eine platz- und kostenaufwendige Angelegenheit.

Der vorliegenden Erfindung liegt die Aufgabe zugrunde, einen Wasserzähler mit integriertem Filter anzugeben, der den Einbau eines zusätzlichen Filters überflüssig macht, wobei die Größe der Filterfläche und die Feinheit der Filterporen an die jeweilige Wasserqualität angepasst werden können, ohne dass die Hauptabmessungen des Wasserzählers vergrößert werden müssen.

Diese Aufgabe wird gelöst durch einen Wasserzähler mit den Merkmalen des Anspruchs 1.

Die Vorteile der erfindungsgemäßen Lösung sind augenfällig. Der Wasserzählerhersteller kann unterschiedliche Gehäuseböden vorhalten und gemäß den Wünschen seiner Kunden so gestalten, dass der Feinfilter entweder hinter der Messkammer angeordnet ist, so wie es von der Deutschen Industrie Norm vorgeschrieben wird, oder auch vor der Messkammer, wo der Filtereffekt am größten ist. Feinfilter vor dem Wasserzähler ermöglichen den Einsatz von Ringkolbenzählem auch in Ländern mit schlechter Wasserqualität. Der Platzbedarf entspricht dem der herkömmlichen Wasserzähler. Durch geschickte Auswahl der Filterfläche lässt sich die Zeitspanne zwischen Reinigung und Austausch der Filterorgane beeinflussen. Besteht die Filtertasse aus einem transparenten Material, lassen sich die Filterorgane auch optisch kontrollieren. Die Wasserzähler mit integriertem Filter lassen sich jederzeit gegen herkömmliche Wasserzähler austauschen, beispielsweise im Rahmen des vom Eichgesetz vorgeschriebenen Austauschs.

Vorzugsweise bestehen alle Gehäuseteile aus Kunststoff. Kunststoffe sind leicht und korrossionsfest.

Zur Abdichtung zwischen Gehäuseoberteil und Filterboden ist vorteilhafterweise wenigstens ein O-Ring vorgesehen, und zwar bevorzugt an dem der Messkammer zugewandten Ende des Gehäusebodens.

Anhand der Zeichnung soll die Erfindung in Form zweier Ausführungsbeispiele näher erläutert werden. Es zeigen
- Fig. 1: eine teilweise aufgebrochene Seitenansicht eines Wasserzählers mit integriertem erstem Filterelement und
- Fig. 2: eine teilweise aufgebrochene Seitenansicht des Wasserzählers mit integriertem zweiten Filterelement.

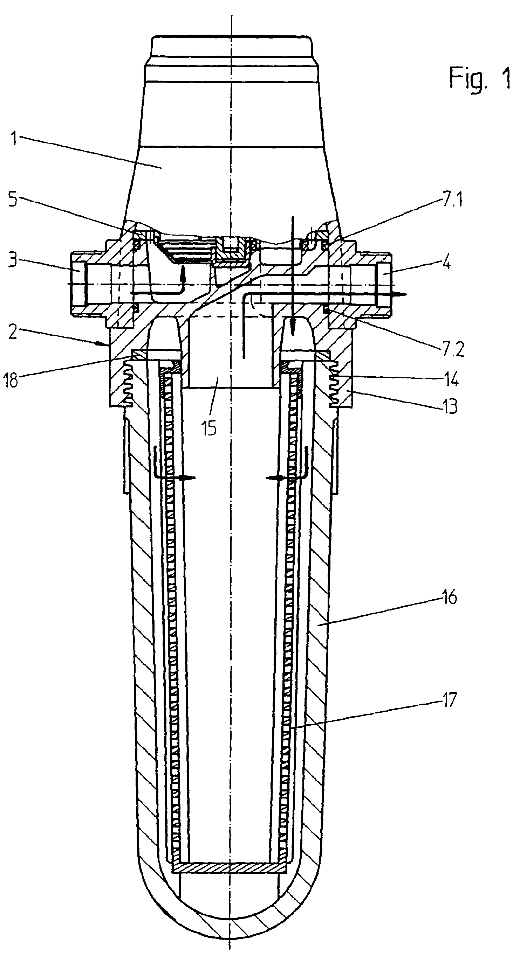

Fig. 1 zeigt teilweise aufgebrochen einen Wasserzähler in Seitenansicht. Man erkennt ein glockenförmiges Gehäuseoberteil 1 mit einer bodenseitigen Öffnung, in die von unten ein Gehäuseboden 2 eingesetzt ist. Dichtungen 7.1, 7.2 sorgen für die erforderliche Abdichtung. Beide Gehäuseteile 1, 2 bestehen bevorzugt aus Kunststoff.

Am Gehäuseoberteil 1 sind eingangsseitig und ausgangsseitig Gewindestutzen 3, 4 angeformt, mit deren Hilfe der Wasserzähler mit dem Rohrleitungsnetz verbunden werden kann. Die Abmessungen des Gehäuseoberteils 1 und der Gewindestutzen 3, 4 entsprechen den Abmessungen herkömmlicher Wasserzähler.

In den Gehäuseboden 2 sind zwei konzentrische Bodenstutzen 13,15 eingeformt. Der äußere Bodenstutzen 13 besitzt vorzugsweise ein Gewinde 14, auf das das Anschlussgewinde einer Filtertasse 16 aufgeschraubt ist, wobei ein Dichtungsring 18 die flüssigkeitsdichte Verbindung bewirkt.

Im Inneren der Filtertasse 16 erkennt man ein Feinfilterelement 17. Dieses ist auf den inneren Bodenstutzen 15 dicht aufgeschoben.

Der innere Bodenstutzen 15 hat Verbindung zum ausgangsseitigen Gewindestutzen 4. Der Zwischenraum zwischen äußerem und innerem Bodenstutzen 13, 15 hat Verbindung zu einer Messkammer 5, der die Messflüssigkeit über den eingangsseitigen Gewindestutzen 3 zugeführt wird. Auf diese Weise befindet sich das integrierte Feinfilter 17 wie z. B. in Deutschland vorgeschrieben hinter der Messkammer 5.

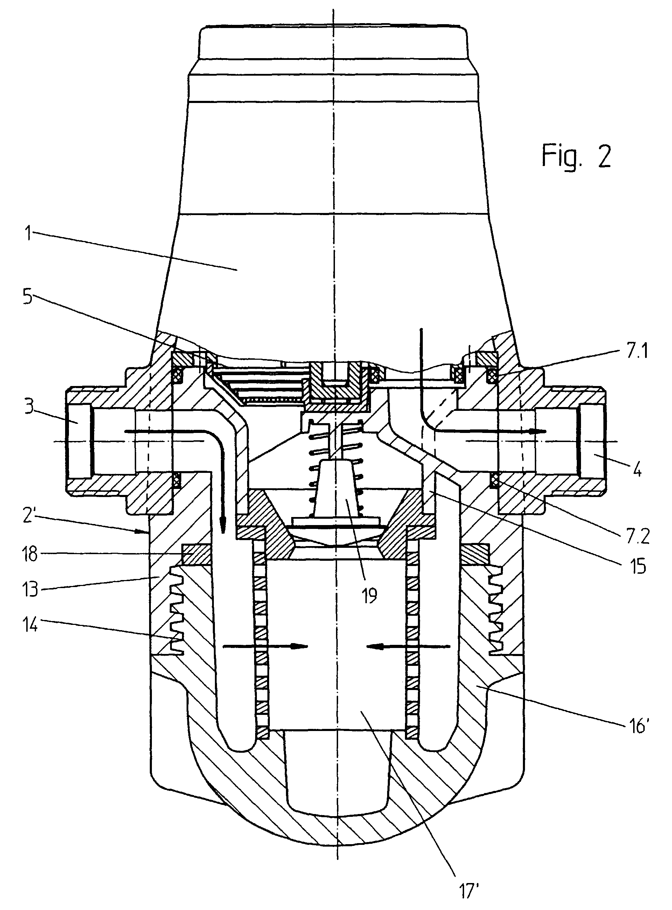

Fig. 2 zeigt eine teilweise aufgebrochene Seitenansicht des Wasserzählers mit integriertem zweitem Feinfilter 17'. In das glockenförmige Gehäuseoberteil 1 ist ein Gehäuseboden 2' eingedichtet. Dieser trägt wieder zwei konzentrische Bodenstutzen 13, 15. Auf das Gewinde 14 des äußeren Bodenstutzens 13 ist eine Filtertasse 16' aufgeschraubt, deren Feinfilterelement 17' gegen den inneren Bodenstutzen 15 abgedichtet ist. In den inneren Bodenstutzen 15 ist zusätzlich ein Rückflussverhinderer 19 integriert.

Bei dem in Fig. 2 dargestellten Ausführungsbeispiel ist die Wasserführung so gewählt, dass der Zwischenraum zwischen den beiden Bodenstutzen 13, 15 mit dem eingangsseitigen Gewindestutzen 3 in Verbindung steht, während der innere Bodenstutzen 15 mit der Messkammer 5 in Verbindung steht. Bei dieser Anordnung befindet sich das Filterelement 17' vor der Messkammer 5, so dass die Messorgane optimal gegen Feststoffe geschützt sind.

## Patentansprüche

1. Wasserzähler, im wesentlichen umfassend
- ein zweiteiliges Gehäuse (1, 2, 2') mit
- einem Gehäuseoberteil (1)
- einem Gehäuseboden (2, 2')
- und eingangs- und ausgangsseitigen Gewindestutzen (3, 4),
- im Gehäuse (1) befindet sich eine Messkammer (5), gekennzeichnet durch die Merkmale:
- der Gehäuseboden (2, 2')
- ist in eine bodenseitige Öffnung des Gehäuseoberteils (1) eingedichtet
- und trägt zwei konzentrische Bodenstutzen (13, 15),
- der innere Bodenstutzen (15)
- dichtet gegen ein Filterelement (17, 17') in einer Filtertasse (16,16')
- und steht in Verbindung
- entweder mit der Messkammer (5)
- oder mit einem der Gewindestutzen (3, 4).

2. Wasserzähler nach Anspruch 1, gekennzeichnet durch das Merkmal:
- das Gehäuse (1, 2, 2') besteht aus Kunststoff.

3. Wasserzähler nach Anspruch 1 oder 2, gekennzeichnet durch die Merkmale:
- wenigstens ein O-Ring (7.1, 7.2) dichtet zwischen Gehäuseoberteil (1) und Boden (2, 2'),
- einer der O-Ringe (7.1) ist an dem der Messkammer (5) zugewandten Ende des Bodens (2, 2') positioniert.

4. Wasserzähler nach einem der Ansprüche 1 bis 3, gekennzeichnet durch das Merkmal:
- der äußere Bodenstutzen (13) hat ein Gewinde passend zur Filtertasse (16, 16'), über das die Filtertasse (16, 16') an dem Gehäuseboden (2, 2') befestigt ist.

5. Wasserzähler nach einem der Ansprüche 1 bis 4, gekennzeichnet durch das Merkmal:
- in den inneren Bodenstutzen (15) ist ein Rückflussverhinderer (19) eingesetzt.
